# EUROPÄISCHE PATENTSCHRIFT

(11) **EP 1 859 958 B1**
(45) Veröffentlichungstag und Bekanntmachung des Hinweises auf die Patenterteilung: **01.09.2010**
(21) Anmeldenummer: 07006944.8
(22) Anmeldetag: 03.04.2007
(51) Int. Cl.: B60B 5/02, B60B 27/00, D04C 1/00, F16C 33/24, F16C 33/28

(54) **Flanschbauteil in Verbundbauweise sowie Verfahren zur Herstellung eines Flanschbauteils**
Composite design flange component and method for manufacturing a flange component
Composant de bride dans une construction composite tout comme procédé destiné à la fabrication d'un composant de bride

(30) Priorität: 24.05.2006 DE 102006024329
(43) Veröffentlichungstag der Anmeldung: 28.11.2007
(73) Patentinhaber: Bayerische Motoren Werke Aktiengesellschaft, 80809 München (DE)
(72) Erfinder: Dullenkopf, Dirk, 80807 München (DE); Kornprobst, Wolfgang, 92345 Töging (DE); Hufenbach, Werner, Prof. Dr.-Ing., 01324 Dresden (DE); Adam, Frank, Dr.-Ing., 01277 Dresden (DE); Leschik, Thomas, 88046 Friedrichshafen (DE); Werner, Jens, 01640 Coswig (DE)

(56) Entgegenhaltungen:
- EP-A- 0 525 253
- EP-A2- 0 285 156
- EP-A2- 0 307 112

## Beschreibung

Die Erfindung betrifft ein Flanschbauteil in Verbundbauweise mit einem im Wesentlichen zylindrischen ersten Bereich und einem im Wesentlichen flanschförmigen zweiten Bereich, insbesondere Radflansch für ein Kraftfahrzeug sowie ein Verfahren zur Herstellung eines Flanschbauteils, entsprechend dem Oberbegriff der Ansprüche 1, 8 und wie sie aus der EP 0 525 253 A bekannt sind.

Flanschbauteile sind in verschiedenen Ausführungen bekannt und werden üblicherweise aus Metall durch Gesenkschmieden oder spanend hergestellt. Ein derartiges Flanschbauteil mit Nabe und Radflansch aus Stahl, duktilem Guss oder Leichtmetall ist beispielsweise aus der DE 196 47 391 A1 bekannt. Zwar sind metallische Flanschbauteile wirtschaftlich herstellbar, sie besitzen jedoch ein hohes Leistungsgewicht.

Für andere Einsatzbereiche, wie in der Bohrleitungstechnik oder als Gleitlagerbuchsen, sind Flanschkonstruktionen in Faserverbundbauweise bekannt. Dabei handelt es sich sowohl um kurzfaserverstärkte Bauteile, die im Press- oder Spritzgussverfahren hergestellt werden, als auch um langfaserverstärkte Bauteile.

Ein Beispiel für ein derartiges Bauteil geht aus der DE 38 88 265 T2 hervor, die ein geflochtenes Lager und ein Verfahren zu dessen Herstellung betrifft. Dieses Lager weist einen Hohlzylinderkörper und einen damit einstückig verbundenen Flansch auf. Sowohl der hohlzylindrische Bereich als auch der Flanschbereich sind aus einer geflochtenen Faserschicht gebildet, die nach dem Flechtvorgang mit einem Harz imprägniert wird.

Das Lager gemäß der DE 38 88 265 T2 besteht ausschließlich aus einem Faserverbundwerkstoff. Der hohlzylindrische Lagerteil weist dabei ein geringes Gewicht auf und ist selbstschmierend, während der Flansch zur Absorption von axialen Lasten oder Schubkräften dient. Zur Übertragung besondere Kräfte zwischen zylindrischem Bereich und Flanschbereich, wie sie insbesondere bei einem Radflansch eines Kraftfahrzeugs als Umlaufbiegung auftreten, ist das bekannte Lager nicht ausgelegt und völlig ungeeignet.

Der Erfindung liegt daher die Aufgabe zugrunde, ein eingangs genanntes Flanschbauteil in Verbundbauweise bereit zu stellen, das einerseits ein geringes Gewicht aufweist und andererseits hoch belastbar ist, so dass größere Kräfte, insbesondere Kräfte aufgrund Umlaufbiegung, zwischen zylindrischem ersten Bereich und flanschförmigem zweiten Bereich übertragbar sind.

Die Lösung dieser Aufgabe erfolgt mit einem Flanschbauteil in Verbundbauweise mit den Merkmalen des Anspruchs 1. Die Kombination verschiedener Werkstoffe in einer hybriden Radflanschkonstruktion ermöglicht die Ausnutzung der spezifischen Vorteile der eingesetzten Materialien. Eine optimale Werkstoffausnutzung kann so nicht nur durch Auswahl jeweils besonders geeigneter Werkstoffe für unterschiedliche Bereiche, sondern auch innerhalb einer Komponente durch gezielte belastungsabhängige Anpassung des Verbundwerkstoffs erreicht werden.

Besonders vorteilhafte Ausgestaltungen und Weiterbildungen des erfindungsgemäßen Flanschbauteils sind Gegenstand der Unteransprüche.

Besonders bevorzugt ist es, wenn wenigstens eine weitere Komponente aus einem Verstärkungswerkstoff, insbesondere aus einem metallischen Werkstoff besteht. Der Verstärkungswerkstoff, beispielsweise die metallische Komponente, erfüllt einerseits in bestimmten Bereichen des Flanschbauteils besondere Festigkeitsanforderungen und dient andererseits bei der Herstellung des Verbundwerkstoffs als Träger. Zweckmäßigerweise weist das Flanschbauteil einen radial innen liegenden Metallkörper und einen mit diesem radial außenseitig verbundenen Faserverbundkörper auf. Gegebenenfalls kann es auch zweckmäßig sein, wenn der radial innen liegende Körper aus einem entsprechend festen Kunststoff besteht.

Als sehr vorteilhaft wird es angesehen ein Metallkörper mit im ersten Bereich des Flanschbauteils im Wesentlichen zylindrischer Gestalt und im zweiten Bereich des Flanschbauteils bei radialem Übergang umlaufend schneidenartig spitz zulaufender Form angesehen, wobei die ideale Ausgestaltung von der Belastung abhängt.

Als besonders günstig hat es sich herausgestellt, wenn der zweite Bereich des Flanschbauteils im Wesentlichen durch den Faserverbundkörper gebildet ist. Der Metallkörper ist zur Verbindung mit dem Faserverbundkörper zweckmäßigerweise außenseitig konturiert. Von Vorteil ist es ferner, wenn im Verbundwerkstoff wenigstens ein Krafteinleitungselement angeordnet ist. Dabei können zur Aufnahme von Krafteinleitungselementen Faserschlaufen des Faserverbundwerkstoffs genutzt werden.

Ein besonders vorteilhaftes Verfahren zur Herstellung eines erfindungsgemäßen Flanschbauteils zeichnet sich dadurch aus, dass zur Herstellung der wenigstens einen Komponente des Flanschbauteils aus einem Verbundwerkstoff die wenigstens eine weitere Komponente mit Fasern in Form eines geflochtenen Schlauchs überzogen wird und die Fasern nachfolgend in eine Kunststoffmatrix eingebettet werden. Es ist nicht erforderlich, das Fasergeflecht im Rahmen der Herstellung des Flanschbauteils zu erzeugen, vielmehr können vorgefertigte, insbesondere günstige standardisierte Flechtschläuche verwendet werden. Der Winkel der Fasern wird dabei durch Wahl entsprechender Schlauchdurchmesser und folglich entsprechender Dehnung bestimmt.

Bevorzugterweise wird der Faserflechtschlauch zur Bildung des zweiten Bereich des Flanschbauteils um ein Vielfaches seines Ursprungsdurchmessers gedehnt, wobei eine Faserausrichtung zumindest annähernd rechtwinklig zur Bauteilachse erreicht wird. Zur Bildung weiterer Faserschichten bietet es sich an, den Faserflechtschlauch umzulegen, wobei im zweiten Bereich des Flanschbauteils Faserschlaufen gebildet werden. Der weist gemäß einer bevorzugten Ausführung eine solche Eigenspannung auf, dass er eigenspannungsbedingt an der wenigstens einen weiteren Komponente des Flanschbauteils anliegt. Gesonderte Maßnahmen, um die Faserschicht an eine tragende Schicht anzulegen, sind daher nicht erforderlich, wenngleich sie unterstützend getroffen werden können.

Gemäß einer besonders vorteilhaften Weiterbildung des Verfahrens wird der Faserflechtschlauch im zweiten Bereich des Flanschbauteils entsprechend einer Flanschform vorgeformt. Zur Herstellung der wenigstens einen Komponente des Flanschbauteils wird nachfolgend die mit dem Faserflechtschlauch überzogene wenigstens eine weitere Komponente des Flanschbauteils in ein Formwerkzeug eingelegt und in eine Kunststoffmatrix eingebettet. Zweckmäßigerweise wird vor Einbringung des Kunststoffwerkstoffs im Formwerkzeug wenigstens ein Krafteinleitungselement oder lokales Verstärkungselement angeordnet.

Nachfolgend werden besonders zu bevorzugende Ausführungsbeispiele der Erfindung unter Bezugnahme auf Figuren näher erläutert, dabei zeigen schematisch und beispielhaft
- Figur 1: ein Flanschbauteil in Verbundbauweise im Schnitt,
- Figur 2: ein weiteres Flanschbauteil in Verbundbauweise im Schnitt,
- Figur 3a: ein Fasergeflecht eines Flanschbauteils in Verbundbauweise in seitlicher Ansicht und
- Figur 3b: ein Fasergeflecht eines Flanschbauteils in Verbundbauweise in isometrischer Ansicht.

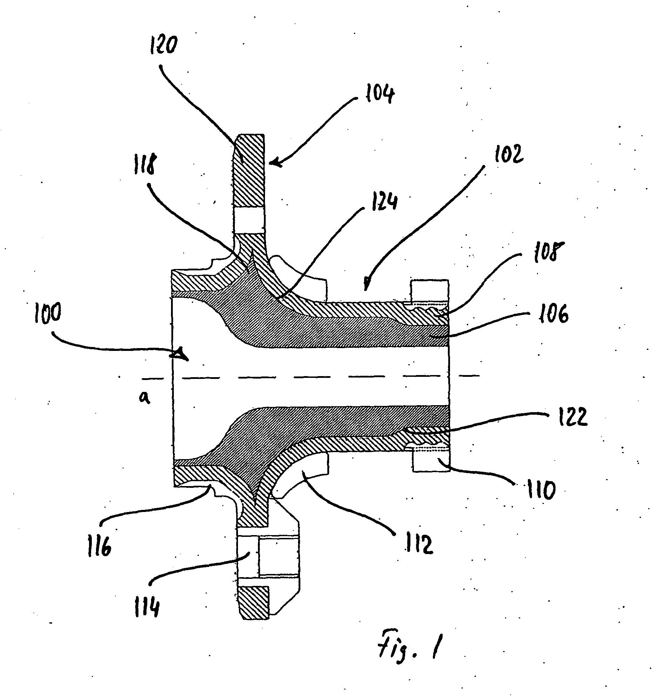

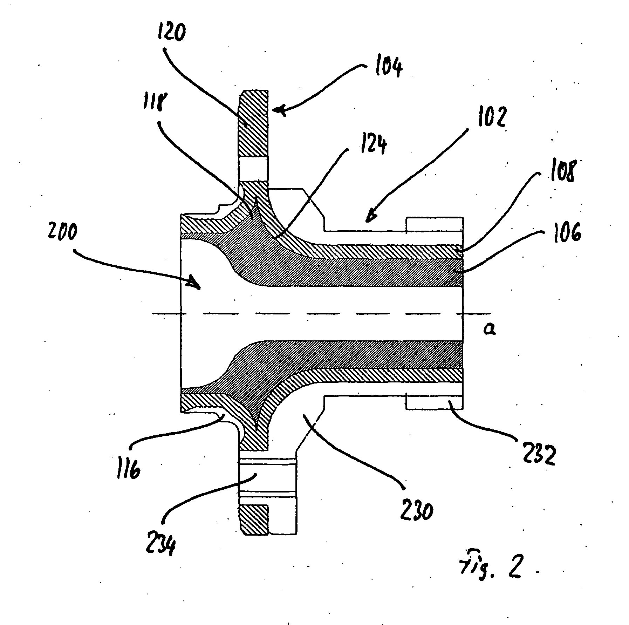

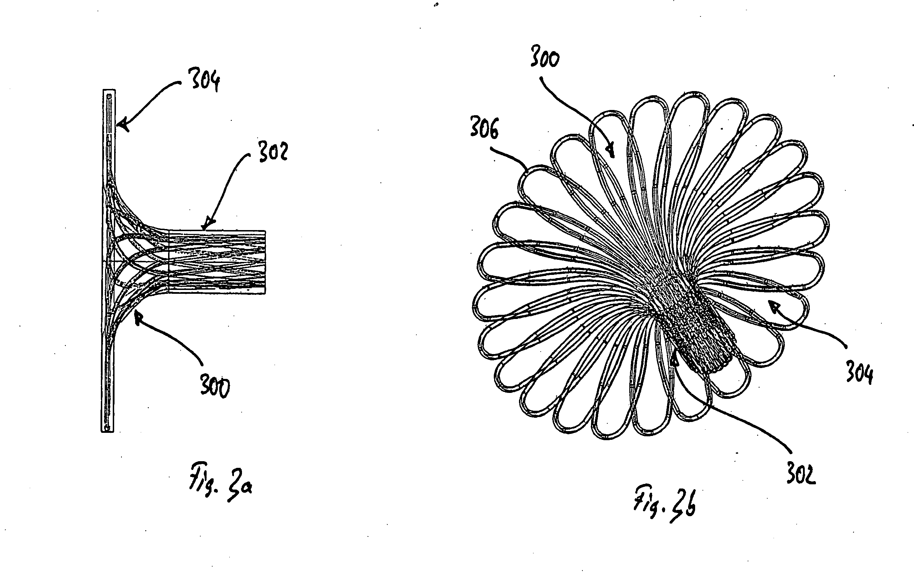

Figur 1 zeigt ein Flanschbauteil 100 in Verbundbauweise, ein weiteres erfindungsgemäßes Flanschbauteil 200 in Verbundbauweise ist in Figur 2 dargestellt. Figur 3a zeigt ein Fasergeflecht 300 eines Flanschbauteils in Verbundbauweise in seitlicher Ansicht, eine isometrische Ansicht des Fasergeflechts 300 ist in Figur 3b gezeigt. Sich entsprechende Komponenten sind in den Figuren mit gleichen Bezugszeichen versehen.

Das in Figur 1 dargestellte Flanschbauteil 100 ist ein Radflansch für ein Kraftfahrzeug. Ein zylindrischer Bereich 102 des Flanschbauteils 100 ist mit einer Fahrzeugachse verbunden, ein flanschförmiger Bereich 104 des Flanschbauteils 100 trägt ein Fahrzeugrad. Bei Fahrt des Kraftfahrzeugs müssen Kräfte zwischen zylindrischem Bereich 102 und flanschförmigem Bereich 104 übertragen werden, dabei handelt es sich um eine umlaufende Biegebelastung.

Das Flanschbauteil 100 umfasst einen Kern 106, welcher vorliegend aus Metall, insbesondere aus Leichtmetall, wie Aluminium, besteht. Der Kern 106 weist einerseits eine belastungsgerechte Geometrie auf und ist andererseits besonders zur Verbindung mit einer Komponente 108 aus einem Verbundwerkstoff geeignet. Im zylindrischen Bereich 102 ist der Kern 106 ebenfalls zylindrisch ausgestaltet und weist endseitig einen Absatz 122 auf, welcher einen Hinterschnittbereich zur formschlüssigen Verbindung mit der Verbundwerkstoffkomponente 108 bietet und gleichzeitig einen besonders angepassten Befestigungsgrund für ein Gewindeinsert 110 bietet. Im Bereich des Flansches 104 ist der Kern 106 bei radialem Übergang 124 umlaufend spitz zulaufend ausgestaltet, so dass ein Bereich 118 mit erhöhter Materialstärke gebildet wird. Der äußere Endbereich ist der Belastung entsprechend mit einer wesentlich geringeren Wandstärke ausgeführt. Übergänge am Kern 106 sind Stufen- bzw. Kerbfrei ausgestaltet, so dass bei Belastung Spannungsspitzen vermieden werden. Um eine gute Verbindung mit der Verbundwerkstoffkomponente 108 zu gewährleisten kann der Kern 106 außenseitig mit einer rauen Oberfläche, beispielsweise einem Riefenmuster, versehen sein.

Die Komponente 108 ist ein Faserverbundwerkstoff. Der Faserverbundwerkstoff besteht aus einem Matrixwerkstoff, wie beispielsweise Kunststoff oder Epoxidharz, und darin eingebetteten Fasern. Um die Stoffeigenschaften der Fasern nutzen zu können sind diese in die Matrix eingebettet. Aufgaben des Matrixwerkstoffes sind dabei die Übertragung und Verteilung der auftretenden Kräfte, die Fixierung der Fasern und deren Abschirmung gegen eventuell aggressive Umgebungsmedien. Es werden vor allem die Eigenschaften der Fasern in Längsrichtung genutzt. Als Fasern werden moderne Industriefasern, wie beispielsweise Kohlenstofffasern, Glasfasern oder Aramidfasern verwendet, die sehr gute mechanische Eigenschaften (Festigkeit, Steifigkeit) besitzen. Es können jedoch auch Naturfasern zum Einsatz kommen.

Der Faserverbundwerkstoff ist als Laminat schichtweise (beispielsweise aus mehreren Fasermatten übereinander) aufgebaut. Vorteile dieser Art des Werkstoffs sind die hohe Festigkeit bei gleichzeitig geringem Gewicht und die einfache Verarbeitung. Die Fasern werden belastungsgerecht im Bauteil ausgerichtet. Somit ist es möglich einen Werkstoff zu konstruieren, der genau auf den Anwendungsfall, auf einen Radflansch für ein Kraftfahrzeug, ausgerichtet ist. Die Fasern sind dabei ähnlich wie bei Pflanzen angeordnet. An höher belasteten Stellen werden mehr Fasern genau in Kraftrichtung angeordnet.

Der Einsatz von geflochtenen endlosen Fasern zur Erzeugung der textilen Flanschpreform, wie sie in den Figuren 3a, 3b gezeigt und dort mit 300 bezeichnet ist, bietet besondere Vorteile, da die Herstellung derartiger Faserflechtschläuche einfach und prozesstechnisch hoch produktiv möglich ist.

Durch die speziellen Eigenschaften des Faserflechtschlauchs lassen sich Querschnittsänderungen leicht realisieren. Die Besonderheit des schlauchförmigen Geflechts liegt in seiner extremen Drapierfähigkeit. Durch Überziehen und drapieren über einen flanschartigen Formkern 106 kann der Faserflechtschlauch so aufgeweitet werden, dass sich der rohrförmige Querschnitt 302 in die Flanschebene 304 aufweitet. Mit dem Faserflechtschlauch kann eine typische Durchmesseränderung von 500-1000%, insbesondere von ca. 700%, realisiert werden, ohne dass seine strukturelle Integrität verloren geht. Hieraus ergibt sich das erreichbare Verhältnis zwischen Rohr- und Scheibendimension des Radflansches. Hinsichtlich der Querschnittsgeometrie des Rohr- bzw. Scheibenabschnitts 302, 304 sowie der absoluten Bauteilabmessungen sind keine Beschränkungen vorhanden.

Das gezielte Ausnutzen der Zusammenhänge zwischen Flechtwinkel und Flechtschlauchdurchmesser ermöglicht eine optimale kraftflussgerechte Anordnung der Fasern. Mit dem Flechtschlauch kann zudem ein steiler Einlauf der Fasern vom Rohrbereich in den Scheibenbereich realisiert werden.

Durch Umkehr und Rücklauf der Flechtrichtung der Fasern werden Faserschlaufen 306 erzeugt. Dies kann beispielsweise durch Umkehr der Flechtrichtung bei der Flechtschlauchherstellung geschehen. Bei Verwendung von herkömmlichen Faserflechtschläuchen ist dieser Effekt auch durch umstülpen des Schlauches erzielbar. Die so erzeugten Schlaufen können unter anderem Krafteinleitungszonen bilden oder als Randsaum genutzt werden. Ein weiterer Vorteil der Schlaufenbildung ist die Möglichkeit einer endlosen Faserablage über mehrere Faserschichten hinweg. Der sich lokal ändernde Faserwinkel im Schlaufenbereich kann variiert werden, indem die Schlaufe 306 gestreckt oder gestaucht wird. Eine Integration von Nebenformelementen in die geflochtene Faserstruktur ist möglich. Insbesondere ist das Einbringen von weiteren lokalen Faserpreformen sowie anderer Einlegeteile in die Flechtstruktur denkbar.

Einlegeteile können als Krafteinleitungselemente, beispielsweise metallische Gewindeeinsätze, oder als Formelemente, wie Kerne, Zentrierringe oder Lagerschalen ausgebildet sein.

Zur Abbildung der textilen Preform können verschiedene organische, anorganische sowie synthetische Fasertypen (z.B. Kohlenstoff-, Glass-, Metall-, Kunststoff- und Keramikfasern) verwendet werden. Über gängige Verbundherstellungsverfahren wird das entstandene textile Faserhalbzeug und entsprechende Einlegeteile zu einem Radflansch konsolidiert. Für die Konsolidierung zum Verbundwerkstoff können unterschiedliche Matrixsysteme wie etwa Kunststoffe, Keramiken und Metalle gewählt werden.

Durch den optimalen, bauteilangepassten Werkstoffeinsatz können Radflanschstrukturen ökonomisch gefertigt werden. Die angestrebte Masseeinsparung wird durch Kombination des Faserverbunds mit seinen hohen spezifischen Eigenschaften und den lokal eingesetzten Verstärkungs- und Anbindungselementen erreicht.

Wie aus Figur 1 ersichtlich, sind mit der Komponente 108 aus Verbundwerkstoff ein Zentrierring 116 zur Zentrierung einer Felge, Gewinde-Inserts 114 mit Innengewinde, ein Abstützring 112 und ein Gewinde-Insert 110 mit Außengewinde und Mutter verbunden. Bei der Ausführung gemäß Figur 2 sind mehrere Verstärkungs- und Anbindungselementen in einem Integral-Insert 230 zusammengefasst, das Innengewinde 234 und ein Außengewinde zur Aufnahme einer Mutter 232 umfasst. Der Flansch 120 wird im Wesentlichen durch die Komponente 108 aus Verbundwerkstoff gebildet, der Kern 106 bietet lediglich eine Unterstützung.

Die Herstellung der Komponente 108 aus Verbundwerkstoff erfolgt beispielsweise in einem Harzinjektionsverfahren, auch RTM-Verfahren (Resin Transfer Moulding), indem der mit einem drapierten Faserflechtschlauch überzogene Kern 106 gegebenenfalls zusammen mit Einlegeteilen in einen schließbaren Formraum eingelegt wird. Ein Harz wird mit einem Härter vermischt und anschließend unter Druck in den Formraum eingebracht, wobei die Faserpreform mit Harz getränkt wird. Unter Wärmezufuhr erstarrt das Harz im Formraum.

## Patentansprüche

1. Flanschbauteil (100, 200) in Verbundbauweise mit einem im Wesentlichen zylindrischen ersten Bereich (102) und einem im Wesentlichen flanschförmigen zweiten Bereich (104), insbesondere Radflansch für ein Kraftfahrzeug, wobei das Flanschbauteil (100, 200) wenigstens eine erste Komponente (106) aus Verstärkungswerkstoff und wenigstens eine zweite Komponente (108) aus einem Verbundwerkstoff umfasst, **dadurch gekennzeichnet, dass** die wenigstens eine zweite Komponente (108) des Flanschbauteils (100, 200) ein Faserverbundwerkstoff mit in einer Kunststoffmatrix eingebetteten geflochtenen Fasern (300) ist, die unter Schlaufenbildung (306) angeordnet sind, wobei der zweite Bereich (104) des Flanschbauteils (100, 200) die Faserschlaufen umfasst.

2. Flanschbauteil (100, 200) nach Anspruch 1, **dadurch gekennzeichnet, dass** wenigstens eine weitere Komponente (106) aus einem metallischen Werkstoff besteht.

3. Flanschbauteil (100, 200) nach einem der vorhergehenden Ansprüche, **gekennzeichnet durch** einen radial innen liegenden Metallkörper (106) und einen mit diesem radial außenseitig verbundenen Faserverbundkörper (108).

4. Flanschbauteil (100, 200) nach einem der vorhergehenden Ansprüche, **dadurch gekennzeichnet, dass** der Metallkörper (106) im ersten Bereich (102) des Flanschbauteils (100, 200) im Wesentlichen zylindrisch und im zweiten Bereich (104) des Flanschbauteils (100, 200) bei radialem Übergang (124) umlaufend schneidenartig spitz zulaufend (118) ausgebildet ist.

5. Flanschbauteil (100, 200) nach einem der vorhergehenden Ansprüche, **dadurch gekennzeichnet, dass** der zweite Bereich (104) des Flanschbauteils (100, 200) im Wesentlichen durch den Faserverbundkörper gebildet ist.

6. Flanschbauteil (100, 200) nach einem der vorhergehenden Ansprüche, **dadurch gekennzeichnet, dass** der Metallkörper (106) zur Verbindung mit dem Faserverbundkörper (108) außenseitig konturiert ist.

7. Flanschbauteil (100, 200) nach einem der vorhergehenden Ansprüche, **dadurch gekennzeichnet, dass** im Verbundwerkstoff (108) wenigstens ein Krafteinleitungselement oder lokales Verstärkungselement (110, 112, 114, 116) angeordnet ist.

8. Verfahren zur Herstellung eines Flanschbauteils (100, 200) nach einem der vorhergehenden Ansprüche, **dadurch gekennzeichnet, dass** zur Herstellung der wenigstens einen Komponente (108) des Flanschbauteils (100, 200) aus einem Verbundwerkstoff die wenigstens eine weitere Komponente (106) mit Fasern in Form eines geflochtenen Schlauchs (300) überzogen wird und die Fasern nachfolgend in eine Kunststoffmatrix eingebettet werden.

9. Verfahren nach Anspruch 8, **dadurch gekennzeichnet, dass** der Faserflechtschlauch (300) zur Bildung des zweiten Bereichs (104) des Flanschbauteils (100, 200) um ein Vielfaches seines Ursprungsdurchmessers gedehnt wird, wobei eine Faserausrichtung zumindest annähernd rechtwinklig zur Bauteilachse (a) erreicht wird.

10. Verfahren nach einem der Ansprüche 8-9, **dadurch gekennzeichnet, dass** der Faserflechtschlauch (300) zur Bildung einer weiteren Faserschicht umgelegt wird, wobei im zweiten Bereich (104) des Flanschbauteils (100, 200) Faserschlaufen (306) gebildet werden.

11. Verfahren nach einem der Ansprüche 8-10, **dadurch gekennzeichnet, dass** der Faserflechtschlauch (300) eigenspannungsbedingt an der wenigstens einen weiteren Komponente (106) des Flanschbauteils (100, 200) anliegt.

12. Verfahren nach einem der Ansprüche 8-11, **dadurch gekennzeichnet, dass** der Fasefflechtschlauch (300) im zweiten Bereich (104) des Flanschbauteils (100, 200) entsprechend einer Flanschform vorgeformt wird.

13. Verfahren nach einem der Ansprüche 8-12, **dadurch gekennzeichnet, dass** zur Herstellung der wenigstens einen Komponente (108) des Flanschbauteils (100, 200) die mit dem Faserflechtschlauch (300) überzogene wenigstens eine weitere Komponente (106) des Flanschbauteils (100, 200) in ein Formwerkzeug eingelegt und in eine Kunststoffmatrix eingebettet wird.

14. Verfahren nach einem der Ansprüche 8-13, **dadurch gekennzeichnet, dass** vor Einbringung des Kunststoffwerkstoffs im Formwerkzeug wenigstens ein Krafteinleitungselement oder lokales Verstärkungselement (110, 112, 114, 116) angeordnet wird.

## Claims

1. A flange component (100, 200) in a composite design with a substantially cylindrical first region (102) and a substantially flange-shaped second region (104), especially wheel flange for a motor vehicle, the flange component (100, 200) comprising at least a first component (106) made of reinforcement material and at least a second component (108) made of a composite material, **characterised in that** the at least one second component (108) of the flange component (100, 200) is a fibre composite material with braided fibres (300) which are embedded in a plastics material matrix and are arranged with a loop formation (306), the second region (104) of the flange component (100, 200) comprising the fibre loops.

2. A flange component (100, 200) according to claim 1, **characterised in that** at least one further component (106) consists of a metallic material.

3. A flange component (100, 200) according to any one of the preceding claims, **characterised by** a metal body (106) located radially on the inside and a fibre composite body (108) connected thereto radially on the outside.

4. A flange component (100, 200) according to any one of the preceding claims, **characterised in that** the metal body (106) is substantially cylindrical in the first region (102) of the flange component (100, 200) and is configured tapering (118) peripherally in the manner of a blade in the second region (104) of the flange component (100, 200) with a radial transition (124).

5. A flange component (100, 200) according to any one of the preceding claims, **characterised in that** the second region (104) of the flange component (100, 200) is substantially formed by the fibre composite body.

6. A flange component (100, 200) according to any one of the preceding claims, **characterised in that** the metal body (106) is contoured on the outside for connection to the fibre composite body (108).

7. A flange component (100, 200) according to any one of the preceding claims, **characterised in that** at least one force introduction element or local reinforcement element (110, 112, 114, 116) is arranged in the composite material (108).

8. A method for producing a flange component (100, 200) according to any one of the preceding claims, **characterised in that** the at least one further component (106) is covered with fibres in the form of a braided hose (300) and the fibres are then embedded in a plastics material matrix to produce the at least one component (108) of the flange component (100, 200) from a composite material.

9. A method according to claim 8, **characterised in that** the fibre braided hose (300) is expanded by a multiple of its original diameter to form the second region (104) of the flange component (100, 200), a fibre orientation at least approximately at a right angle to the component axis (a) being achieved.

10. A method according to either of claims 8 or 9, **characterised in that** the fibre braided hose (300) is turned over to form a further fibre layer, fibre loops (306) being formed in the second region (104) of the flange component (100, 200).

11. A method according to any one of claims 8 to 10, **characterised in that** the fibre braided hose (300) rests due to internal stress on the at least one further component (106) of the flange component (100, 200).

12. A method according to any one of claims 8 to 11, **characterised in that** the fibre braided hose (300) in the second region (104) of the flange component (100, 200) is pre-shaped in accordance with a flange shape.

13. A method according to any one of claims 8 to 12, **characterised in that** the at least one further component (106) of the flange component (100, 200) covered with the fibre braided hose (300) is placed in a moulding tool and embedded in a plastics material matrix to produce the at least one component (108) of the flange component (100, 200).

14. A method according to any one of claims 8 to 13, **characterised in that** at least one force introduction element or local reinforcement element (110, 112, 114, 116) is arranged before the introduction of the plastics material in the moulding tool.

## Revendications

1. Pièce en forme de bride (100, 200) de construction composite ayant une première zone (102) essentiellement cylindrique et une seconde zone (104) essentiellement en forme de bride, notamment une bride de roue de véhicule automobile,
la pièce en forme de bride (100, 200) ayant au moins un premier composant (106) en une matière plastique renforcée et au moins un second composant (108) en une matière composite,
**caractérisée en ce qu'**
au moins un second composant (108) de la pièce en forme de bride (100, 200) est un matériau composite renforcé par des fibres avec des fibres (300) intégrées et tressées dans une matrice de matière plastique, ces fibres étant réparties pour former des boucles (306),
la seconde zone (104) de la pièce en forme de bride (100, 200) comprenant les boucles de fibres.

2. Pièce en forme de bride (100, 200) selon la revendication 1, **caractérisée en ce qu'**
au moins un autre composant (106) est en un matériau métallique.

3. Pièce en forme de bride (100, 200) selon l'une des revendications précédentes,
**caractérisée par**
un corps métallique (106) radialement à l'intérieur et un corps composite avec des fibres (108) reliées à celui-ci, radialement du côté extérieur.

4. Pièce en forme de bride (100, 200) selon l'une des revendications précédentes,
**caractérisée en ce que**
dans la première zone (102) de la pièce en forme de bride (100,200), le corps métallique (106) est essentiellement de forme cylindrique et dans la seconde zone (104) de la pièce en forme de bride (100, 200), à la transition radiale (124), il est réalisé de façon à former une jonction comme une arête de coupe (118).

5. Pièce en forme de bride (100, 200) selon l'une des revendications précédentes,
**caractérisée en ce que**
la seconde zone (104) de la pièce en forme de bride (100, 200) est formée principalement par le corps composite renforcé par des fibres.

6. Pièce en forme de bride (100, 200) selon l'une des revendications précédentes,
**caractérisée en ce que**
le côté extérieur du corps métallique (106) a un contour pour être relié au corps composite de fibres (108).

7. Pièce en forme de bride (100, 200) selon l'une des revendications précédentes,
**caractérisée en ce que**
la matière composite (108) comporte au moins un élément de transmission d'effort ou un élément de renforcement local (110, 112, 114, 116).

8. Procédé de fabrication d'une pièce en forme de bride (100, 200) selon l'une des revendications précédentes,
**caractérisé en ce que**
pour réaliser au moins un composant (108) de la pièce en forme de bride (100, 200) en un matériau composite, on revêt au moins un autre composant (106) avec des fibres sous la forme d'un tube tressé (300) et ensuite, on intègre les fibres dans une matrice de matière plastique.

9. Procédé selon la revendication 8,
**caractérisé en ce que**
le tube tressé de fibres (300) est étendu d'un multiple de son diamètre d'origine pour former la seconde zone (104) de la pièce en forme de bride (100, 200), pour avoir un alignement des fibres qui est au moins sensiblement perpendiculaire à l'axe (a) du composant.

10. Procédé selon l'une des revendications 8 et 9,
**caractérisé en ce que**
le tube tressé de fibres (300) est rabattu pour former une autre couche de fibres et dans la seconde zone (104) de la pièce en forme de bride (100, 200), on forme des boucles de fibres (306).

11. Procédé selon l'une des revendications 8 à 10,
**caractérisé en ce que**
sous l'effet des contraintes, le tube tressé de fibres (300), s'applique contre au moins un autre composant (106) de la pièce en forme de bride (100, 200).

12. Procédé selon l'une des revendications 8 à 11,
**caractérisé en ce que**
le tube tressé de fibres (300) est préformé selon une forme de bride dans la seconde zone (104) de la pièce en forme de bride (100, 200).

13. Procédé selon l'une des revendications 8 à 12,
**caractérisé en ce que**
pour réaliser au moins un composant (108) de la pièce en forme de bride (100, 200), on place au moins l'autre composant (106) de la pièce en forme de bride (100, 200) revêtu du tube de fibres tressées (300) dans un moule et on l'intègre dans une matrice de matière plastique.

14. Procédé selon l'une des revendications 8 à 13,
**caractérisé en ce qu'**
avant d'introduire la matière plastique dans le moule, on prévoit au moins un élément de transmission d'effort ou un élément de renforcement local (110, 112, 114, 116).
